(19) **Europäisches Patentamt / European Patent Office / Office européen des brevets**

(11) **EP 4 670 266 B1**

(12) # EUROPEAN PATENT SPECIFICATION

(45) Date of publication and mention
of the grant of the patent:
**29.04.2026 Bulletin 2026/18**

(21) Application number: **24754275.6**

(22) Date of filing: **06.08.2024**

(51) International Patent Classification (IPC):
$H02M\ 7/00^{(2006.01)}$    $H02M\ 7/02^{(2006.01)}$
$H02M\ 7/04^{(2006.01)}$    $H02M\ 1/00^{(2006.01)}$
$H02M\ 1/15^{(2006.01)}$    $H02M\ 1/42^{(2007.01)}$
$H02M\ 7/219^{(2006.01)}$

(52) Cooperative Patent Classification (CPC):
**H02M 1/4258; H02M 1/0058; H02M 1/15;**
H02M 7/219

(86) International application number:
**PCT/EP2024/072217**

(87) International publication number:
**WO 2025/036765 (20.02.2025 Gazette 2025/08)**

(54) **AN AC-DC SWITCH MODE ELECTRICAL POWER CONVERTER**

ELEKTRISCHER WECHSELSTROM-GLEICHSTROM-SCHALTWANDLER

CONVERTISSEUR DE PUISSANCE ÉLECTRIQUE À MODE DE COMMUTATION CA-CC

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.08.2023 EP 23382841**

(43) Date of publication of application:
**31.12.2025 Bulletin 2026/01**

(73) Proprietor: **Differential Power, SL
28042 Madrid (ES)**

(72) Inventor: **COBOS MARQUEZ, José Antonio
28042 Madrid (ES)**

(74) Representative: **Torner, Juncosa I Associats, SL
C / Pau Claris, 108, 1r 1a
08009 Barcelona (ES)**

(56) References cited:
**CN-Y- 201 345 618**    **US-A1- 2018 222 333**
**US-B1- 6 239 584**

## Description

Technical Field

The present invention generally relates to the field of electrical power converters. More specifically, the invention relates to an AC-DC switch mode electrical power converter with Power Factor Correction and tight regulation of the output voltage.

Background of the Invention

An AC-DC electrical power converter with power factor correction and tight regulation of the output voltage is known by Tuan Ngo, et al. "A Single-Phase Bidirectional Dual Active Half-Bridge Converter" [1]. This converter includes two cascaded power stages, which is the typical and most broadly used power supply architecture for AC-DC power converters supplying more than 75W and requiring Power Factor Correction (PFC).

The first power stage, known as a "Power Factor correction stage", takes an input current nearly proportional to the AC supply input voltage, so that power factor is close to one. For a sinusoidal input voltage, e.g. 50Hz or 60Hz, the current is also sinusoidal. Hence, the power taken from the AC input voltage source is pulsating between 0 and twice the output power P. This occurs because the product of a sine waveform (input voltage) multiplied by another sine waveform (the input current) yields a squared sine, which is a cosine waveform of twice the line frequency, e.g. 100Hz or 120Hz, plus a mean value, which is the DC output power.

Since there is a difference between the pulsating input power at twice the line frequency, typically 100Hz or 120Hz, and the constant DC power supplied to the load, there must be a storage capacitor, Cs, to store the excess of input power during the cycle angle form 45° to 135° and deliver that stored energy between 0° and 45° and from 135° to 180°. These type of power converters, that is, the rectifiers with power factor correction are known as "energy buffered converters". The same applies on the other direction of the power flow. DC-AC inverters supplied from batteries with almost constant output current, require an internal storage capacitor to balance the difference between the pulsating output power and the constant DC input power.

It is important to note that the storage capacitor must have a twice-the-line-frequency ripple, because it is storing and releasing energy at twice the line frequency. It is not a question of control, but a question of power and energy processing.

This fact yields the requirement to have a second power stage to eliminate the "low frequency" (twice the line frequency) ripple. The second power stage is a DC-DC converter, typically supplied from the output capacitor of the first PFC stage, which is typically the storage capacitor Cs.

The typical structure of an AC-DC converter with PFC is a typical 4-diode bridge followed by a variable gain DC-DC converter, referred to as PFC DC-DC converter. The diode bridge converts the negative voltage of the AC input voltage into a positive voltage so that the absolute value of a sinusoid (so called a rectified voltage) is applied to the PFC DC-DC converter. This PFC DC-DC converter is therefore supplied by an input voltage that changes from 0V to $110 \cdot \sqrt{2}$ V or 220 $220 \cdot \sqrt{2}$ V, depending on the geographical location.

A broadly used alternative, and more efficient approach, is to integrate the functionality of the diode bridge with the PFC DC-DC converter in the so called "Bridgeless boost PFC DC-DC converter". It is more efficient because the input current flows through two power switches in series rather than through at least three power switches. Conduction losses are therefore lower.

In [1], the PFC stage is a "bridgeless half-bridge boost" PFC power converter as described by Ramesh Srinivasan et al. "A unity power factor converter using a half-bridge topology" [2], with the advantage that input current only flows through one power switch, further reducing conduction losses, at the expense of higher voltage in the storage capacitor. In some applications, the switching leg of the half-bridge is replaced by a "flying capacitor" or a "switched capacitor" leg to reduce the voltage applied to the power switches.

The role of the DC-DC converter in the second stage is to regulate the output voltage eliminating the "low frequency ripple" (typically 100Hz or 120Hz) present in the storage capacitor. This power converter operates at a switching frequency (typically >100kHz) which is orders of magnitude higher than line frequency.

Likewise, in [1], the second stage belongs to the family of the "Dual Active Bridge, DAB" converters. Whereas typical DAB are composed by two full-bridge stages connected through a transformer and eventually an additional inductance in series with the transformer, in [1] the full-bridges are replaced by "half-bridges", reducing conduction loss.

In summary, it is important to note that AC-DC converters with PFC must control two flows of energy: the first one to drain an input current proportional to the input voltage and store the energy in a storage capacitor; the second one to eliminate the "low frequency" voltage ripple and generate a constant and regulated DC output voltage.

As a consequence, these two power conversions require two control variables and two inductances. In [1], there is an inductor in the PFC stage and one transformer in series with an inductor in the second DC-DC stage.

The power architecture, however, may be improved as proposed in this invention, by combining the two power stages into just one, and combining the two inductances in just one magnetic component: the transformer. Specifically, the magnetizing inductance is used to regulate the power flow for the PFC functionality, and the leakage inductance is used to regulate the power flow of the second DC-DC converter. This approach reduces volume, cost and losses, compared to the state-of-the-art converters.

Other prior art power converters are also known, for instance, US 2018222333-A1 discloses an integrated and isolated onboard charger for plug-in electric vehicles that includes an ac-dc converter and a dual-output dc-dc resonant converter, for both HV traction batteries and LV loads. The integrated and isolated onboard charger may be configured as unidirectional or bidirectional, and is capable of delivering power from HV traction batteries to the grid for vehicle-to-grid (V2G) applications. To increase the power density of the converter, the dual-output DC-DC resonant converter may combine magnetic components of resonant networks into a single three-winding electromagnetically integrated transformer (EMIT). The resonant converter may be configured as a half-bridge topology with split capacitors as the resonant network components to further reduce the size of converter.

Another example is CN 201345618 -Y, which discloses a single-stage semibridge AC-DC converter comprising an input rectification filtering circuit, a voltage rising and falling PFC link, and a semibridge DC-DC converter link, wherein the semibridge DC-DC converter link is composed of two switch pipes, two capacitances, a transformer and two diodes. The voltage rising and falling PFC link and the semibridge DC-DC converter link share the switch pipe, by controlling the duty ratio of the switch pipe, current of a inductance discontinuously works, thereby realizing automatic power factor correction function, and simultaneously realizing terminal voltage rising or falling of the first capacitance and the second capacitance.

US 6239854-B1 discloses a two-switch, two-inductor boost converter that achieves output-voltage regulation in a wide input-voltage and load-current range using a constant-frequency by employing an auxiliary transformer to couple current paths of the two boost inductors so that both inductors carry the same current. By forcing the current through the boost inductors to be the same, the energy in both inductors is forced to change in unison, i.e., both inductors increase the energy when both switches are turned on simultaneously and decrease (transfer) energy when either of the converter's two switches is turned off. As a result, the stored and transferred energy of both inductors can be controlled in a wide input-voltage and load range using a constant-frequency control by controlling the time duration that the two switches are simultaneously on.

Description of the Invention

Present invention provides an AC-DC switch mode electrical power converter, that as known in the field, comprises an input half-bridge with at least two legs connected in parallel, an output half-bridge with at least two legs connected in parallel, and a transformer.

In some embodiments, the two legs of the input half-bridge comprise an input capacitive leg and an input switching leg, and the two legs of the output half-bridge comprise an output capacitive leg and output switching leg. In other embodiments, any or several of the input capacitive leg, input switching leg, output capacitive leg and output switching leg can be replaced by a switched capacitor leg. According to the invention, the input capacitive leg includes a first input capacitor and a second input capacitor, connected in series; the input switching leg includes a first input power switch and a second input power switch, connected in series; the output capacitive leg includes a first output capacitor and a second output capacitor, connected in series; and the output switching leg includes a first output power switch and a second output power switch, connected in series. In those embodiments in which a switched capacitor leg or legs is/are included, it includes various power switches and capacitors.

In the proposed AC-DC switch mode electrical power converter, unlike the known solutions in the field, a secondary winding of the transformer is connected between a second output middle point of the output capacitive leg (or of the switched capacitor leg) and a first output middle point of the output switching leg (or of the switched capacitor leg). Additionally, a primary winding of the transformer is connected in series to an AC input voltage source, wherein the transformer and the AC input voltage source are connected between a first input middle point of the input capacitive leg (or switched capacitor leg) and a second input middle point of the input switching leg (or switched capacitor leg). Moreover, the input current and the output voltage of the AC-DC switch mode electrical power converter are controlled based on control variables, in particular, based on a duty cycle of the input half-bridge, a duty cycle of the output half-bridge, and a phase shift between the duty cycle of the half-bridge and the duty cycle of the output half-bridge.

Particularly, the AC-DC switch mode electrical power converter is controlled/operated using a (closed-loop) control circuit. In some embodiments, the control variables are calculated by a regulator of the control circuit based on sensed output, input or internal variables of the AC-DC switch mode electrical power converter. For example, the sensed variables can comprise the output voltage of the converter, an output power, etc.

In some embodiments, the power switches are configured to be turned to an ON and/or OFF state based on driving signals. These driving signals are particularly generated by a modulator(of the control circuit), which is operatively connected to the regulator, to receive the control variables as inputs.

In some embodiments, the regulator is configured to calculate the duty cycle of the input half-bridge to control the input current of the AC-DC switch mode electrical power converter in order the input current be proportional to the voltage of the AC input voltage source, and to calculate the phase shift to regulate the output voltage of the AC-DC switch mode electrical power converter.

In some of said embodiments, the duty cycle of the output half-bridge can be configured to enable zero voltage switching (ZVS) of the power switches. This is particularly done by the regulator.

In some embodiments, the AC-DC switch mode electrical power converter also includes a series inductance that is connected in series with the primary winding of the transformer. The AC-DC switch mode electrical power converter can also include a load connected to the positive voltage DC rail and to the negative voltage DC rail of the output half-bridge.

In yet some embodiments, the transformer can be a three-phase transformer. In this case, the AC-DC switch mode electrical power converter comprises three input switching legs and three output switching legs.

Brief Description of the Drawings

The previous and other advantages and features will be more fully understood from the following detailed description of embodiments, with reference to the attached figures, which must be considered in an illustrative and non-limiting manner, in which:

Fig. 1 illustrates a 2-stage AC-DC electrical power converter, comprising a bridgeless boost half-bridge power factor corrector cascaded by a dual active half-bridge DC-DC power converter, according to the prior art.

Fig. 2 illustrates the proposed AC-DC switch mode electrical power converter, according to an embodiment of the present invention.

Fig. 3 illustrates the building blocks of the controller of the AC-DC switched mode electrical power converter, including the regulator that calculates the control variables d1, d2 and $\theta$ using the values of the sensed variables and the modulator that generates the driving signals of the power switches.

Fig.4A graphically illustrates the line frequency (50Hz) waveforms of the voltage, current and power waveforms at the AC input voltage source, where the input current is proportional to the input voltage and the input power is the product of both magnitudes.

Fig. 4B graphically illustrates the line frequency (50Hz) waveforms of the voltage at the input and output capacitors as well as the magnetizing current and the voltage in the secondary winding of the transformer.

Fig. 5A graphically illustrates the switching frequency (200kHz) waveforms of the driving signals of the power switches of the input and output half-bridge converters, where a phase shift can be observed, as well as the resulting voltage in the leakage inductance, that drives the transformer current injected to the half-bridge output converter for a line angle of 0 degrees.

Fig. 5B graphically illustrates the switching frequency (200kHz) waveforms of the driving signals of the power switches of the input and output half-bridge converters, where a phase shift can be observed, as well as the resulting voltage in the leakage inductance, that drives the transformer current injected to the half-bridge output converter for a line angle of 90 degrees.

Fig. 6 illustrates a switched capacitor leg, according to an embodiment of the present invention.

Fig. 7 illustrates an inductance connected in series with the transformer.

Fig. 8 illustrates a three-phase bridgeless DPx-PFC power converter, according to an embodiment of the present invention.

Detailed Description of the Invention and of Preferred Embodiments

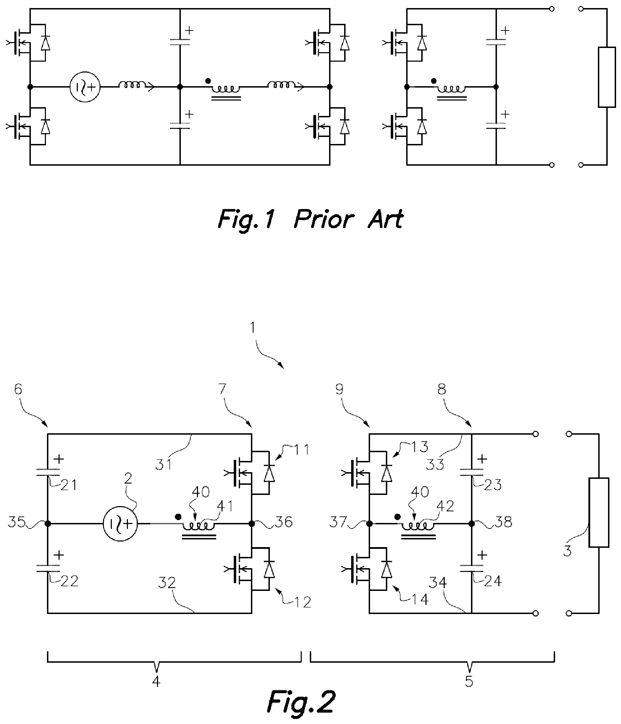

Fig. 2 shows a generic embodiment of the proposed AC-DC switch mode electrical power converter 1, or simply power converter 1, from now on. As seen in Fig. 2, this basic embodiment of the power converter 1 comprises a transformer 40, which is the only magnetic component included or forming part of the power converter 1, an input half-bridge 4, and an output half-bridge 5. The input half-bridge 4 includes a first input capacitor 21 connected in series to a second input capacitor 22, forming an input capacitive leg 6, and a first input power switch 11 connected in series to a second input power switch 12, forming an input switching leg 7. The output half-bridge 5 includes a first output capacitor 23 connected in series to a second output capacitor 24, forming an output capacitive leg 8, and a first output power switch 13 connected to a second output power switch 14, forming an output switching leg 9. The input capacitive leg 6 is connected in parallel to the input switching leg 7 and the output capacitive leg 8 is connected in parallel to the output switching leg 9.

The secondary winding 42 of the transformer 40 is connected between the middle point 38 (or second output middle point) of the output capacitive leg 8 and the middle point 37 (or first output middle point) of the output switching leg 9. On the other hand, the primary winding 41 of the transformer 40 is connected in series to an AC input voltage source 2, such that the assembly consisting of such series connection is connected between a middle point 35 (or first input middle point) of the input capacitive leg 6 and a middle point 36 (or second input middle point) of the input switching leg 7.

As also seen in the figure, the power converter 1 can also comprise a load 3 connected thereto. In particular, connected to the positive voltage DC rail 33 and to the negative voltage DC rail 34 of the output half-bridge 5.

Note that the proposed converter 1 can be regarded as a single-stage power converter since a magnetizing inductance and a leakage inductance (not shown in the figures) of the transformer 40 are used to regulate the two power conversions that are required to implement an AC-DC power converter with Power Factor Correction (PFC).

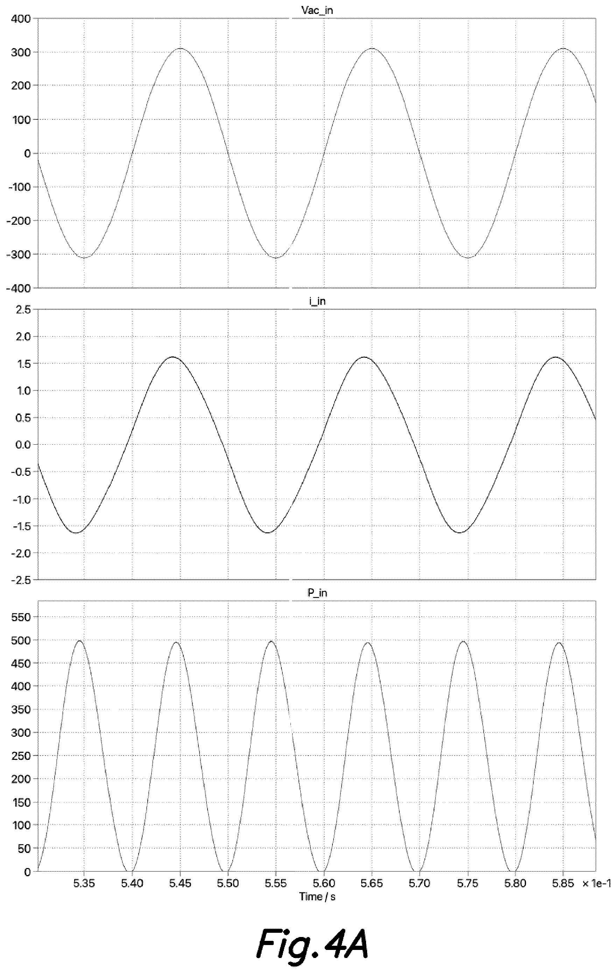

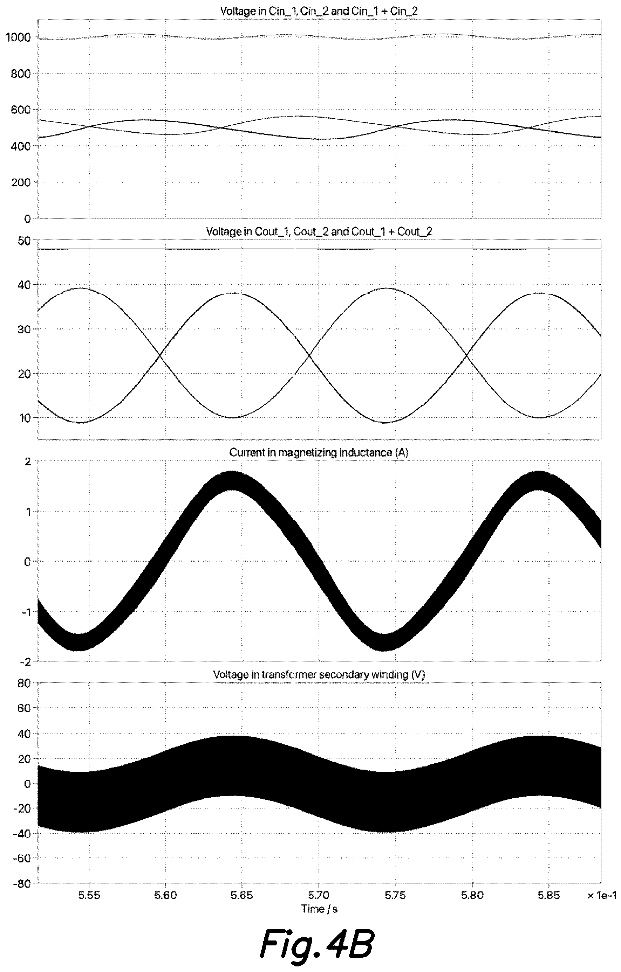

Therefore, the power converter 1 can be operated to take an input current from the AC input voltage source 2 proportional to such voltage, i.e. PFC, as shown in Fig. 4A. The power converter 1 also has the capability to regulate an output voltage of the power converter 1 (see Fig. 4B) at the switching frequency of the power converter 1 (orders of magnitude higher than the line frequency of the AC input voltage source 2). That is, eliminating the low (twice the line frequency) frequency voltage ripple present in the input and output capacitors 21-24 (see Fig. 4B).

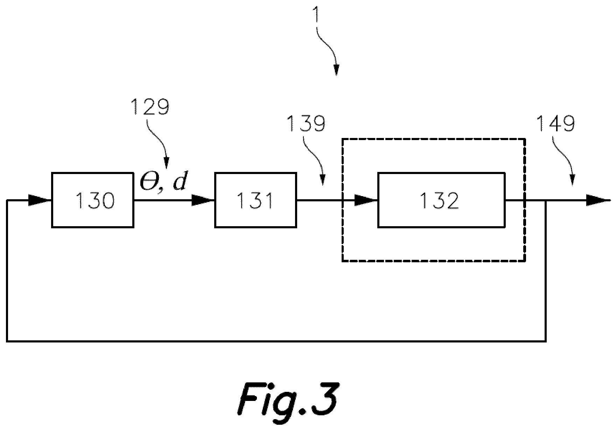

Fig. 3 shows an embodiment of the control architecture controlling the power converter 1. The working principle of the control circuit can be as follows. As seen in the figure, a regulator 130 and a modulator 131 are used in this case. The regulator 130 is the element of the control circuit that computes the control variables $\theta$ and $d$ ($d$1, $d$2) 129. In particular, this is done based on sensed output, input or internal variables 149, e.g. an output voltage of the converter ($V_{out}$), a voltage between the positive 31 and negative 32 DC voltage rails of the input half-bridge 4, an input current, etc. of the power converter 1. The modulator 131 is connected to the regulator 130 and is configured to receive the computed control variables 129 and to generate driving signals 139 for all the power switches 11, 12, 13, 14 of the power stage 132.

The power switches 11, 12, 13, 14, can include any controllable switch such as Metal-Oxide-Semiconductor Field Effect Transistors (MOSFET). In other embodiments, the power switches can include simple diodes and the like.

It should be understood that if the power switches are MOSFET switches, the modulator 131 is adapted/configured to generate the driving signals 139 (i.e. logic control signals) to provide a conducting status on the switches and turn them to an ON and/or OFF state in order to apply the above-described operation.

In an embodiment, operation in the power converter 1 can be as follows:

A) Power Factor correction stage:

- This stage is very similar to the one described in [2] using the magnetizing inductance as the inductor used in [2]. The half-bridge 4 operates in a way that resembles two mirrored buck-boost converters, processing power from one input capacitor 21 (or 22) to the other 22 (or 21), depending on the sign (positive or negative) of the AC input voltage source 2.

- The fact that the AC input voltage source 2 is connected in series with the magnetizing inductance acting as the buck-boost inductor, implies that some power is also taken from the AC input voltage source 2 in addition to the power transferred from one input capacitor 21 (or 22) to the other 22 (or 21).

- The mean value of the current taken from the AC input voltage source 2 may be regulated to be proportional to the voltage, adjusting the duty cycle d1 of the input half-bridge 4.

- Note that the description of the operation of the input half-bridge 4 depends on what is considered "energy source" and what is considered "load". Authors is [2] name this converter "Boost half-bridge", which could also be regarded to as "two mirrored Boost converters forming a half-bridge". The reason is that they consider the energy source to be the AC input voltage source 2 and the load the series connection of the two input capacitors 21, 22, which indeed is the output of the power factor corrector since a load is connected between the positive and negative DC voltage rails of the input half-bridge. Note that the proposed power converter 1 does not include any load connected to the input half-bridge 4.

- The fact that the current injected/taken from the middle point 35 of the capacitive leg 6 is proportional (typically sinusoidal) to the AC input voltage source 2 produces a low frequency (line frequency) voltage ripple in the input capacitors 21, 22, phase shifted 180°. The sum of these two 180° phase-shifted voltages produces a low frequency (twice the line frequency) voltage ripple consistent with the voltage ripple in the storage capacitor Cs of [2], which is in fact the equivalent parallel connection of the two input capacitors 21, 22.

B) DC-DC converter stage:

- The connection of the input half-bridge 4 with the output half-bridge 5 through the transformer 40 resembles the DC-DC converter stage in [1] in which the power flows from the equivalent storage capacitor Cs formed by the series connection of two input capacitors (which equivalent capacitance in terms of energy storage is the parallel connection of the two input capacitors 21, 22 of the proposed power converter 1) to the load 3 connected between the positive 33 and negative 34 DC rails of the output half-bridge 5. However, a significant difference is that the AC input voltage source 2 is connected in series with the transformer 40, which is not the case in [1].

- In fact, the right interpretation of the operation of the DC-DC converter stage of present invention is as follows:

  a. A first "Direct power converter", referred to as DPx, as described by J.A. Cobos et al. "Direct Power Converter -DPx- for High Gain and High Current Applications" [3] that transfers power from the first input capacitor 21 and the AC input voltage source 2 connected in series to the first output capacitor 23 through the transformer 40 and the power switches 11 and 13.

  b. A second DPx converter that transfers power from the second input capacitor 22 and the AC input voltage source 2 connected in series to the second output capacitor 24 through the transformer 40 and the power switches 12 and 14.

  c. Two output mirrored buck boost converters forming the output half-bridge 5 that transfer power from one output capacitor 23 (or 24) to the other output capacitor 24 (or 23) through the power switches 12, 14.

  d. The voltage between the positive DC rail 33 and the negative DC rail 34 is the output voltage (see Fig. 4B) of the power converter 1, where the load 3 is connected. This output voltage is regulated at the switching frequency of the power converter 1, by means of one of the control variables 129, e.g. the phase shift $\theta$ (see Fig.3). Note that the switching frequency of the power converter 1 is orders of magnitude higher than the line frequency of the AC input voltage source 2, hence the line frequency voltage ripple present both in the input capacitors 21, 22 and in the output capacitors 23 and 24 is not present at the load 3, because the regulator 130 controls the voltage ripple in the output capacitors 23, 24 to be equal and opposite, that is, phase shifted 180°.

Therefore, the input half-bridge 4 and the output half-bridge 5 operate in a similar manner, with a significant low frequency (line frequency) voltage ripple in the first input middle point 35 and second output middle point 38 of the capacitive legs 6, 8. Note the significant difference between the two bridges: the voltage between the positive 31 and negative 32 DC voltage rails of the input half-bridge 4 has a low frequency (twice the line frequency) voltage ripple (see Fig. 4B), consistent with the required energy storage in a PFC capacitor Cs, whereas the low frequency ripple does not exist between the positive 33 and negative 34 DC voltage rails of the output half-bridge 5 (see Fig. 4B), where the load 3 is connected.

In Fig.4A and Fig. 4B the line frequency (50Hz) waveforms are illustrated. In Fig. 4A the voltage, current and power waveforms at the AC input voltage source 2 can be seen, where the input current is proportional to the input voltage and the input power is the product of both magnitudes, as expected in an AC-DC power converter with PFC.

In Fig. 4B the line frequency (50Hz) waveforms of the voltage at the input 21, 22 and output 23, 24 capacitors is illustrated, where the voltage ripple described above can be observed. Likewise, it can be seen that the magnetizing current follows the same sinusoidal evolution as the input current. Finally, the voltage in the secondary winding of the transformer 42, which is consistent with the voltage in the output capacitors 23, 24, is also shown.

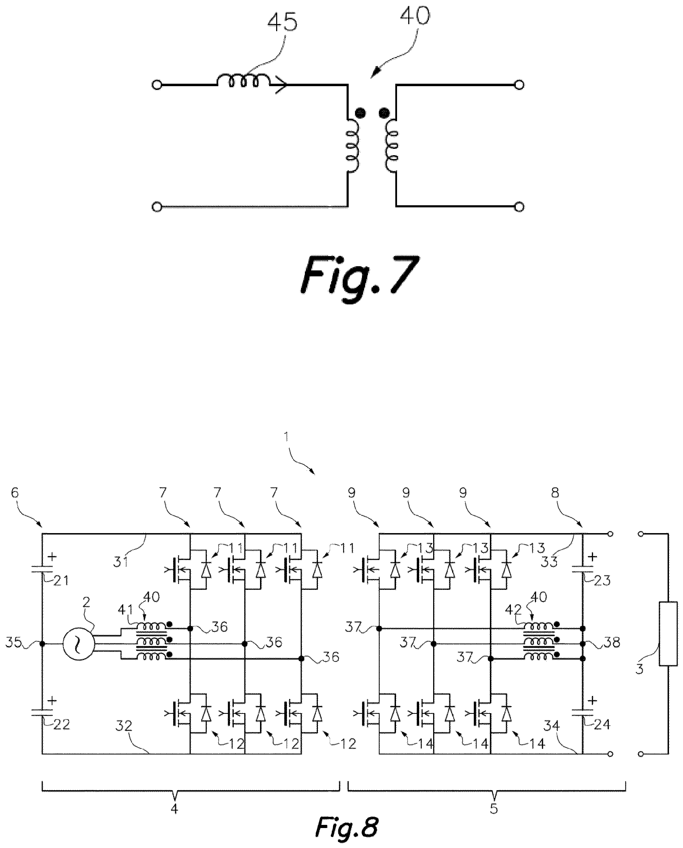

It must be noted that the value of the voltage ripple is dependent on the value of each of the capacitance of each one of the four capacitors 21, 22, 23, 24. The voltage ripple can be also dependent on the value of the leakage inductance of the transformer 40 (or of an inductor, similar to the inductor 45 shown in Fig. 7).

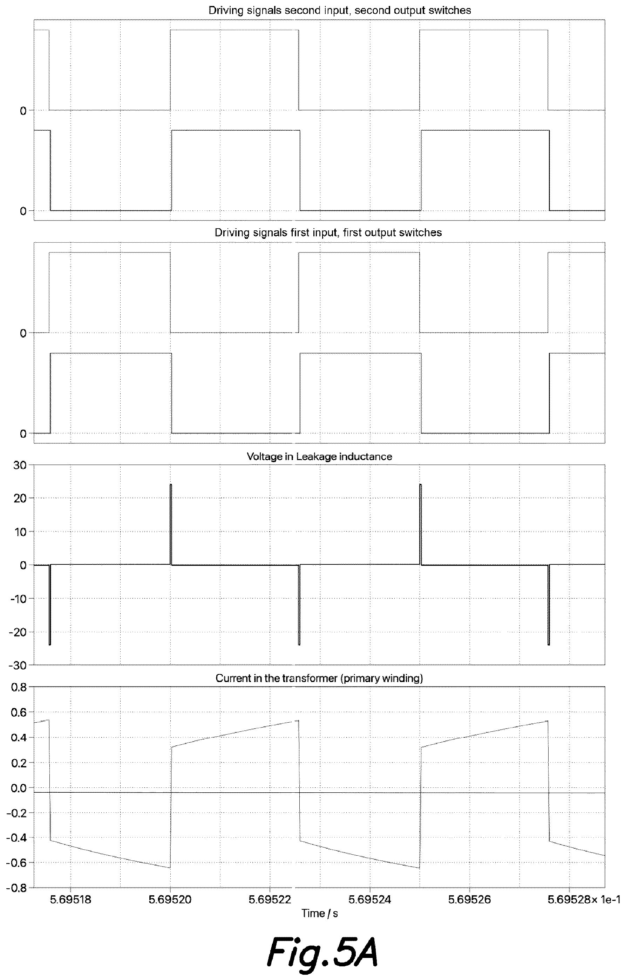

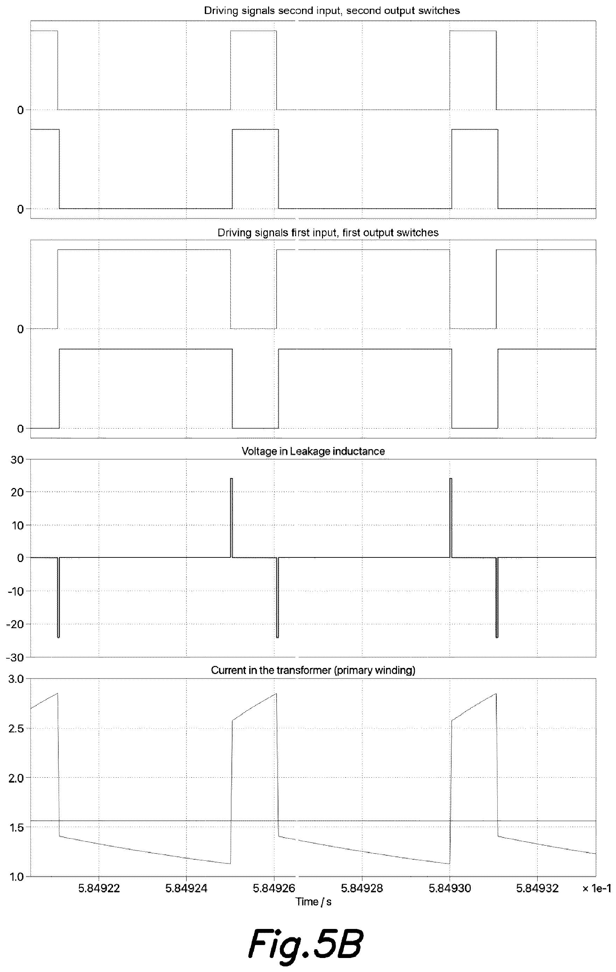

In Fig. 5A and Fig. 5B the switching frequency (200 kHz) waveforms are shown. These are the same waveforms for different line angles of 0 degrees and 90 degrees.

The driving signals of the power switches 11-14 of the input half-bridge 4 and output bridge 5 show the phase shift $\theta$ which produces the resulting voltage in the leakage inductance that drives the current injected to the transformer 40 from the input half-bridge 4 to the output half-bridge 5.

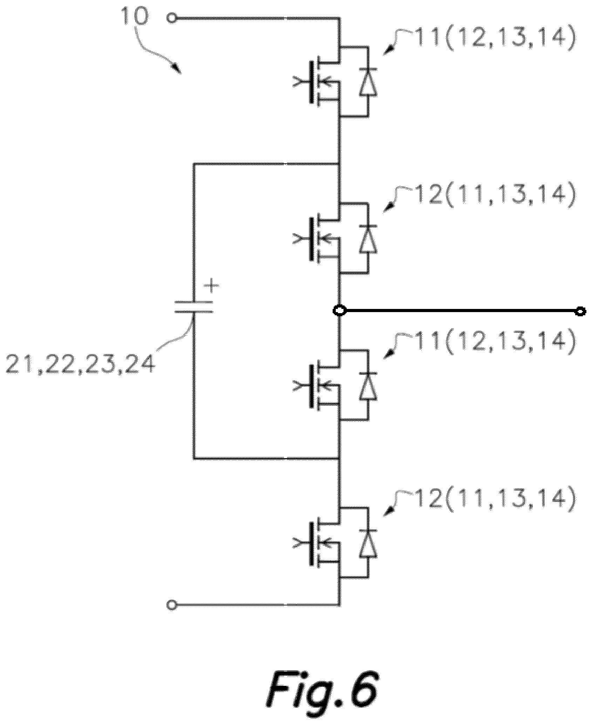

Fig. 6 shows an enhancement of the generic embodiment illustrated in Fig. 2. In this embodiment, any of the capacitive and/or switching legs 6-9 can be replaced by a switched capacitor leg 10, which is formed by power switches and capacitors. In this particular embodiment, it is formed by four power switches and one capacitor, not limitative, as in other embodiments it could be formed by a different number of switches and capacitors.

Depending on the electrical specifications of a given application, it may be convenient to increase the effect of the leakage inductance by an additional inductance in series with the transformer 40 as illustrated in Fig. 7.

With reference now to Fig. 8, another embodiment of the proposed power converter 1 is shown. In this case, different to the embodiment of Fig. 2, the power converter 1 comprises a three-phase architecture including a three-phase transformer 40 connected to a corresponding input switching leg 7 and output switching leg 9.

In other alternative embodiments, not shown, a power converter 1 can be connected to each one of the three-phases of a three-phase AC input voltage source 2.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible.

The scope of the present invention is defined in the claims that follow.

## Claims

1. An AC-DC switch mode electrical power converter, comprising:

    an input half-bridge (4) comprising two legs connected in parallel, one leg defining an input capacitive leg (6) or a switched capacitor leg (10) and one leg defining an input switching leg (7) or a switched capacitor leg (10), the input capacitive leg (6) comprising a first input capacitor (21) connected in series to a second input capacitor (22), the input switching leg (7) comprising a first input power switch (11) connected in series to a second input power switch (12), and the switched capacitor leg (10) comprising a combination of power switches and capacitors;
    an output half-bridge (5) comprising two legs connected in parallel, one leg defining an output capacitive leg (8) or a switched capacitor leg (10) and one leg defining an output switching leg (9) or a switched capacitor leg (10), the output capacitive leg (8) comprising a first output capacitor (23) connected in series to a second output capacitor (24), the output switching leg (9) comprising a first output power switch (13) connected in series to a second output power switch (14), and the switched capacitor leg (10) comprising a combination of power switches and capacitors; and
    a transformer (40);
    a secondary winding (42) of the transformer (40) is connected between a second output middle point (38) of the output capacitive leg (8) or the switched capacitor leg (10) and a first output middle point (37) of the output switching leg (9) or the switched capacitor leg (10);
    **characterized in that**
    a primary winding (41) of the transformer (40) is connected in series to an AC input voltage source (2), the primary winding of the transformer (40) and the AC input voltage source (2) being connected between a first input middle point (35) of the input capacitive leg (6) or the switched capacitor leg (10) and a second input middle point (36) of the input switching leg (7) or the switched capacitor leg (10); and **in that**, an input current and an output voltage of the AC-DC switch mode electrical power converter (1) are controlled based on control variables (129), the later comprising a duty cycle (d1) of the input half-bridge (4), a duty cycle (d2) of the output half-bridge (5), and a phase shift ($\theta$) between the duty cycle (d1) of the half-bridge (4) and the duty cycle (d2) of the output half-bridge (5).

2. The AC-DC switch mode electrical power converter of claim 1, wherein the control variables (129) are calculated by a regulator (130) based on sensed output, input or internal variables (149) of the AC-DC switch mode electrical power converter (1), wherein the output, input or internal variables include: the output voltage, a voltage between a positive DC voltage rail (31) and a negative DC voltage rail (32) of the input half-bridge (4), and the input current.

3. The AC-DC switch mode electrical power converter of claim 2, further comprising a modulator (131) operatively connected to the regulator (130) and configured to receive the control variables (129) as inputs from the regulator (130), and to generate driving signals (139) based on the control variables (129) for turning the first input power switch (11), the second input power switch (12), the first output power switch (13), and the second output power switch (14) between ON and OFF states.

4. The AC-DC switch mode electrical power converter of any one of the previous claims 2 or 3, wherein the regulator (130) is configured to:

    calculate the duty cycle (d1) of the input half-bridge (4) to control the input current of the AC-DC switch mode electrical power converter (1) for the input current to be proportional to a voltage of the AC input voltage source (2), and calculate the phase shift ($\theta$) to regulate the output voltage of the AC-DC switch mode electrical power converter (1).

5. The AC-DC switch mode electrical power converter of claim 4, wherein the regulator is further configured to calculate the duty cycle (d2) of the output half-bridge (5) to enable zero voltage switching, ZVS, of the first input power switch (11), second input power switch (12), first output power switch (13), and second output power switch (14).

6. The AC-DC switch mode electrical power converter of any one of the previous claims, further comprising a series inductance (45) that is connected in series with the primary winding (41) of the transformer (40).

7. The AC-DC switch mode electrical power converter of any one of the previous claims, wherein:

the transformer (40) is a three-phase transformer,

the input half-bridge (4) is formed by the input capacitive leg (6) and three input switching legs (7), and

the output half-bridge (5) is formed by the output capacitive leg (8) and three output switching legs (9).

8. The AC-DC switch mode electrical power converter of any one of the previous claims, further comprising a load (3), connected to a positive voltage DC rail (33) and to a negative voltage DC rail (34) of the output half-bridge (5).

**Patentansprüche**

1. Elektrischer Wechselstrom-Gleichstrom-Schaltwandler, umfassend:

eine Eingangshalbbrücke (4), umfassend zwei parallel geschaltete Schenkel, wobei ein Schenkel einen kapazitiven Eingangsschenkel (6) oder einen geschalteten Kondensatorschenkel (10) definiert und ein Schenkel einen Eingangsschaltschenkel (7) oder einen geschalteten Kondensatorschenkel (10) definiert, wobei der kapazitive Eingangsschenkel (6) einen ersten Eingangskondensator (21) umfasst, der mit einem zweiten Eingangskondensator (22) in Reihe geschaltet ist, der Eingangsschaltschenkel (7) einen ersten Eingangsleistungsschalter (11) umfasst, der mit einem zweiten Eingangsleistungsschalter (12) in Reihe geschaltet ist, und der geschaltete Kondensatorschenkel (10) eine Kombination von Leistungsschaltern und Kondensatoren umfasst;

eine Ausgangshalbbrücke (5), umfassend zwei parallel geschaltete Schenkel, wobei ein Schenkel einen kapazitiven Ausgangsschenkel (8) oder einen geschalteten Kondensatorschenkel (10) definiert und ein Schenkel einen Ausgangsschaltschenkel (9) oder einen geschalteten Kondensatorschenkel (10) definiert, wobei der kapazitive Ausgangsschenkel (8) einen ersten Ausgangskondensator (23) umfasst, der mit einem zweiten Ausgangskondensator (24) in Reihe geschaltet ist, der Ausgangsschaltschenkel (9) einen ersten Ausgangsleistungsschalter (13) umfasst, der mit einem zweiten Ausgangsleistungsschalter (14) in Reihe geschaltet ist, und der geschaltete Kondensatorschenkel (10) eine Kombination von Leistungsschaltern und Kondensatoren umfasst; und

einen Transformator (40);

wobei eine Sekundärwicklung (42) des Transformators (40) zwischen einem zweiten Ausgangsmittelpunkt (38) des kapazitiven Ausgangsschenkels (8) oder des geschalteten Kondensatorschenkels (10) und einem ersten Ausgangsmittelpunkt (37) des Ausgangsschaltschenkels (9) oder des geschalteten Kondensatorschenkels (10) angeschlossen ist;

**dadurch gekennzeichnet, dass**

eine Primärwicklung (41) des Transformators (40) mit einer Eingangswechselspannungsquelle (2) in Reihe geschaltet ist, wobei die Primärwicklung des Transformators (40) und die Eingangswechselspannungsquelle (2) zwischen einem ersten Eingangsmittelpunkt (35) des kapazitiven Eingangsschenkels (6) oder des geschalteten Kondensatorschenkels (10) und einem zweiten Eingangsmittelpunkt (36) des Eingangsschaltschenkels (7) oder des geschalteten Kondensatorschenkels (10) angeschlossen sind; und dass,

ein Eingangsstrom und eine Ausgangsspannung des elektrischen Wechselstrom-Gleichstrom-Schaltwandlers (1) basierend auf Steuergrößen (129) gesteuert werden, wobei letztere ein Tastverhältnis (d1) der Eingangshalbbrücke (4), ein Tastverhältnis (d2) der Ausgangshalbbrücke (5) und eine Phasenverschiebung (θ) zwischen dem Tastverhältnis (d1) der Halbbrücke (4) und dem Tastverhältnis (d2) der Ausgangshalbbrücke (5) umfassen.

2. Elektrischer Wechselstrom-Gleichstrom-Schaltwandler nach Anspruch 1, wobei die Steuergrößen (129) von einem Regler (130) basierend auf erfassten Ausgangs-, Eingangs- oder internen Größen (149) des elektrischen Wechselstrom-Gleichstrom-Schaltwandlers (1) berechnet werden, wobei die Ausgangs-, Eingangs- oder internen Größen Folgendes enthalten: die Ausgangsspannung, eine Spannung zwischen einer positiven Gleichspannungsschiene (31) und einer negativen Gleichspannungsschiene (32) der Eingangshalbbrücke (4) und den Eingangsstrom.

3. Elektrischer Wechselstrom-Gleichstrom-Schaltwandler nach Anspruch 2, ferner umfassend einen Modulator (131), der betriebsmäßig mit dem Regler (130) verbunden und dazu konfiguriert ist, die Steuergrößen (129) als Eingaben von dem Regler (130) zu empfangen und Ansteuersignale (139) basierend auf den Steuergrößen (129) zu generieren, um den ersten Eingangsleistungsschalter (11), den zweiten Eingangsleistungsschalter (12), den ersten Ausgangsleistungsschalter (13) und den zweiten Ausgangsleistungsschalter (14) zwischen EIN- und AUS-Zuständen zu schalten.

**4.** Elektrischer Wechselstrom-Gleichstrom-Schaltwandler nach einem der vorhergehenden Ansprüche 2 oder 3, wobei der Regler (130) für Folgendes konfiguriert ist:

Berechnen des Tastverhältnisses (d1) der Eingangshalbbrücke (4), um den Eingangsstrom des elektrischen Wechselstrom-Gleichstrom-Schaltwandlers (1) so zu steuern, dass der Eingangsstrom proportional zu einer Spannung der Eingangswechselspannungsquelle (2) ist, und Berechnen der Phasenverschiebung (θ), um die Ausgangsspannung des elektrischen Wechselstrom-Gleichstrom-Schaltwandlers (1) zu regeln.

**5.** Elektrischer Wechselstrom-Gleichstrom-Schaltwandler nach Anspruch 4, wobei der Regler ferner dazu konfiguriert ist, das Tastverhältnis (d2) der Ausgangshalbbrücke (5) zu berechnen, um die Nullspannungsschaltung, ZVS, des ersten Eingangsleistungsschalters (11), zweiten Eingangsleistungsschalters (12), ersten Ausgangsleistungsschalters (13) und zweiten Ausgangsleistungsschalters (14) zu ermöglichen.

**6.** Elektrischer Wechselstrom-Gleichstrom-Schaltwandler nach einem der vorhergehenden Ansprüche, ferner umfassend eine Serieninduktivität (45), die in Reihe mit der Primärwicklung (41) des Transformators (40) geschaltet ist.

**7.** Elektrischer Wechselstrom-Gleichstrom-Schaltwandler nach einem der vorhergehenden Ansprüche, wobei:

der Transformator (40) ein Dreiphasen-Transformator ist, die Eingangshalbbrücke (4) durch den kapazitiven Eingangsschenkel (6) und drei Eingangsschaltschenkel (7) gebildet wird, und die Ausgangshalbbrücke (5) durch den kapazitiven Ausgangsschenkel (8) und drei Ausgangsschaltschenkel (9) gebildet wird.

**8.** Elektrischer Wechselstrom-Gleichstrom-Schaltwandler nach einem der vorhergehenden Ansprüche, ferner umfassend eine Last (3), die an eine positive Gleichspannungsschiene (33) und an eine negative Gleichspannungsschiene (34) der Ausgangshalbbrücke (5) angeschlossen ist.

**Revendications**

**1.** Convertisseur de puissance électrique à découpage AC-DC, comprenant :

un demi-pont d'entrée (4) comprenant deux branches connectées en parallèle, une branche définissant une branche capacitive d'entrée (6) ou une branche à condensateur commuté (10) et une branche définissant une branche de commutation d'entrée (7) ou une branche à condensateur commuté (10), la branche capacitive d'entrée (6) comprenant un premier condensateur d'entrée (21) connecté en série à un second condensateur d'entrée (22), la branche de commutation d'entrée (7) comprenant un premier interrupteur de puissance d'entrée (11) connecté en série à un second interrupteur de puissance d'entrée (12), et la branche à condensateur commuté (10) comprenant une combinaison d'interrupteurs de puissance et de condensateurs ;
un demi-pont de sortie (5) comprenant deux branches connectées en parallèle, une branche définissant une branche capacitive de sortie (8) ou une branche à condensateur commuté (10) et une branche définissant une branche de commutation de sortie (9) ou une branche à condensateur commuté (10), la branche capacitive de sortie (8) comprenant un premier condensateur de sortie (23) connecté en série à un second condensateur de sortie (24), la branche de commutation de sortie (9) comprenant un premier interrupteur de puissance de sortie (13) connecté en série à un second interrupteur de puissance de sortie (14), et la branche à condensateur commuté (10) comprenant une combinaison d'interrupteurs de puissance et de condensateurs ; et
un transformateur (40) ;
un enroulement secondaire (42) du transformateur (40) est connecté entre un second point médian de sortie (38) de la branche capacitive de sortie (8) ou de la branche à condensateur commuté (10) et un premier point médian de sortie (37) de la branche de commutation de sortie (9) ou de la branche à condensateur commuté (10) ;
**caractérisé en ce que**
un enroulement primaire (41) du transformateur (40) est connecté en série à une source de tension d'entrée AC (2), l'enroulement primaire du transformateur (40) et la source de tension d'entrée AC (2) étant connectés entre un premier point médian d'entrée (35) de la branche capacitive d'entrée (6) ou de la branche à condensateur commuté (10) et un second point médian d'entrée (36) de la branche de commutation d'entrée (7) ou de la branche à condensateur commuté (10) ; et **en ce que**,
un courant d'entrée et une tension de sortie du convertisseur de puissance électrique à découpage AC-DC (1) sont commandés sur la base de variables de commande (129), ces dernières comprenant un rapport cyclique (d1) du demi-pont d'entrée (4), un rapport cyclique (d2) du demi-pont de sortie (5), et un déphasage (θ) entre le rapport cyclique (d1) du demi-pont (4) et le rapport cyclique (d2) du demi-pont de sortie (5).

2. Convertisseur de puissance électrique à découpage AC-DC selon la revendication 1, dans lequel les variables de commande (129) sont calculées par un régulateur (130) sur la base de variables de sortie, d'entrée ou internes détectées (149) du convertisseur de puissance électrique à découpage AC-DC (1), dans lequel les variables de sortie, d'entrée ou internes comprennent : la tension de sortie, une tension entre un rail de tension continue positif (31) et un rail de tension continue négatif (32) du demi-pont d'entrée (4), et le courant d'entrée.

3. Convertisseur de puissance électrique à découpage AC-DC selon la revendication 2, comprenant en outre un modulateur (131) connecté de manière opérationnelle au régulateur (130) et configuré pour recevoir les variables de commande (129) en tant qu'entrées provenant du régulateur (130), et pour générer des signaux de commande (139) sur la base des variables de commande (129) pour commuter le premier interrupteur de puissance d'entrée (11), le second interrupteur de puissance d'entrée (12), le premier interrupteur de puissance de sortie (13), et le second interrupteur de puissance de sortie (14) entre des états ON et OFF.

4. Convertisseur de puissance électrique à découpage AC-DC selon l'une quelconque des revendications précédentes 2 ou 3, dans lequel le régulateur (130) est configuré pour :

   calculer le rapport cyclique (d1) du demi-pont d'entrée (4) afin de commander le courant d'entrée du convertisseur de puissance électrique à découpage AC-DC (1) pour que le courant d'entrée soit proportionnel à une tension de la source de tension d'entrée AC (2), et
   calculer le déphasage (θ) afin de réguler la tension de sortie du convertisseur de puissance électrique à découpage AC-DC (1).

5. Convertisseur de puissance électrique à découpage AC-DC selon la revendication 4, dans lequel le régulateur est en outre configuré pour calculer le rapport cyclique (d2) du demi-pont de sortie (5) afin de permettre une commutation à tension nulle, ZVS, du premier interrupteur de puissance d'entrée (11), du second interrupteur de puissance d'entrée (12), du premier interrupteur de puissance de sortie (13), et du second interrupteur de puissance de sortie (14).

6. Convertisseur de puissance électrique à découpage AC-DC selon l'une quelconque des revendications précédentes, comprenant en outre une inductance en série (45) qui est connectée en série avec l'enroulement primaire (41) du transformateur (40).

7. Convertisseur de puissance électrique à découpage AC-DC selon l'une quelconque des revendications précédentes, dans lequel :

   le transformateur (40) est un transformateur triphasé,
   le demi-pont d'entrée (4) est formé par la branche capacitive d'entrée (6) et trois branches de commutation d'entrée (7), et
   le demi-pont de sortie (5) est formé par la branche capacitive de sortie (8) et trois branches de commutation de sortie (9).

8. Convertisseur de puissance électrique à découpage AC-DC selon l'une quelconque des revendications précédentes, comprenant en outre une charge (3), connectée à un rail de tension continue positif (33) et à un rail de tension continue négatif (34) du demi-pont de sortie (5).

Fig.1  Prior  Art

Fig.2

*Fig.3*

*Fig.4A*

Fig.4B

Fig.5A

Fig.5B

*Fig.6*

Fig.7

Fig.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018222333 A1
- CN 201345618 Y
- US 6239854 B1

**Non-patent literature cited in the description**

- **TUAN NGO et al.** *A Single-Phase Bidirectional Dual Active Half-Bridge Converter*
- **J.A. COBOS et al.** Direct power converter. *Direct Power Converter -DPx- for High Gain and High Current Applications*